(19) **Europäisches Patentamt / European Patent Office / Office européen des brevets**

(11) **EP 4 293 775 A1**

(12) # EUROPEAN PATENT APPLICATION
published in accordance with Art. 153(4) EPC

(43) Date of publication:
**20.12.2023 Bulletin 2023/51**

(21) Application number: **22752677.9**

(22) Date of filing: **03.02.2022**

(51) International Patent Classification (IPC):
**H01M 10/052** $^{(2010.01)}$    **H01M 10/0562** $^{(2010.01)}$

(52) Cooperative Patent Classification (CPC):
**H01M 10/052; H01M 10/0562;** Y02E 60/10;
Y02P 70/50

(86) International application number:
**PCT/JP2022/004199**

(87) International publication number:
**WO 2022/172850 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.02.2021 JP 2021020075**

(71) Applicant: **Nippon Kodoshi Corporation
Kochi-shi, Kochi 781-0395 (JP)**

(72) Inventors:
• **MORIMOTO Kenta**
  **Kochi-shi Kochi 781-0395 (JP)**
• **OGAWA Kentaro**
  **Kochi-shi Kochi 781-0395 (JP)**
• **KUROIWA Masahiro**
  **Kochi-shi Kochi 781-0395 (JP)**

(74) Representative: **Betten & Resch
Patent- und Rechtsanwälte PartGmbB
Maximiliansplatz 14
80333 München (DE)**

(54) **SUPPORT BODY AND LITHIUM ION SECONDARY BATTERY**

(57) This support body included in a solid electrolyte layer of a lithium ion secondary battery has sufficient physical strength and improves the permeability of the solid electrolyte into the interior of the support body, thereby making it possible to sufficiently form a pass line of lithium ions in the interior of the solid electrolyte layer, and a solid electrolyte layer having low internal resistance is obtained. The support body included in the solid electrolyte layer of the lithium ion secondary battery is constituted by a non-woven fabric having an air permeability in a range of 1 to 50 L/cm$^2$/min, a thickness in a range of 5 to 30 um, and a density in a range of 0.15 to 0.45 g/cm$^3$.

EP 4 293 775 A1

**Description**

Technical Field

The present invention relates to a support body included in a solid electrolyte layer that is interposed between a positive electrode and a negative electrode of a lithium ion secondary battery, and a lithium ion secondary battery including the solid electrolyte layer that includes the support body.

Background Art

As a secondary battery having high energy density, a lithium ion secondary battery using a liquid electrolyte (hereinafter, an electrolytic solution) is used. The lithium ion secondary battery using an electrolytic solution includes a separator interposed between a positive electrode and a negative electrode and is filled with an electrolytic solution.

An organic electrolytic solution is mainly used for an electrolytic solution employed in the lithium ion secondary battery using an electrolytic solution. Since the organic electrolytic solution is liquid and flammable, there may be a concern over a possibility of liquid leakage and a possibility of ignition. Under such circumstances, in order to further enhance the safety of the lithium ion secondary battery, a lithium ion secondary battery using a solid electrolyte (hereinafter, an all-solid-state battery) instead of using an electrolytic solution has been developed. As a matter of course, the all-solid-state battery do not cause liquid leakage because the electrolyte is solid. Moreover, the solid electrolyte has high flame retardancy and heat resistance compared with the electrolytic solution. For these reasons, the all-solid-state battery has attracted attention as a lithium ion secondary battery excellent in safety.

In addition, unlike a lithium ion secondary battery using an electrolytic solution, the all-solid-state battery is a battery that deteriorates in characteristics in a small degree at a high temperature and thus does not require a cooling device. Accordingly, the all-solid-state battery is a secondary battery also advantageous for improving the energy density per volume of the battery pack. Furthermore, from the viewpoint of being advantageous as a secondary battery having high energy density, expectation is rising for the all-solid-state battery as a large secondary battery, such as a battery for an electric vehicle. That is, demands for an increase in size of all-solid-state batteries remain strong.

The solid electrolyte layer interposed between the positive electrode and the negative electrode of the all-solid-state battery is required to have a function of ionically conducting lithium ions between the positive electrode and the negative electrode and a function of preventing a short circuit between the positive electrode active material and the negative electrode active material. In addition, for obtaining a battery having excellent energy density and low internal resistance, the thickness of the solid electrolyte layer is required to be thin.

Adopted methods for forming the solid electrolyte layer include: a method of mixing a solid electrolyte and a binder and rolling under heating to form a sheet; and a method of coating an electrode with a solid electrolyte slurry and drying the coated electrode.

However, consider the case where a method of coating an electrode with a slurry containing a solid electrolyte and drying the coated electrode is used as an example. In such a case, when the large all-solid-state battery is manufactured, strain may be generated in the solid electrolyte layer during drying, and a crack may be generated. Therefore, stable formation of a thin and uniform solid electrolyte layer is difficult. If a thin and uniform solid electrolyte layer cannot be stably formed, a short circuit may occur in addition to deterioration of ionic conduction.

On the other hand, in order to prevent a short circuit, the thickness of the solid electrolyte layer can be increased. However, a large thickness leads to an increase in size of a battery, a decrease in energy density, and an increase in internal resistance.

In order to solve the above problems, known methods use, for an all-solid-state battery, a solid electrolyte layer in which a thin-film-shaped sheet (hereinafter, a support body) is allowed to contain a solid electrolyte, and the solid electrolyte and the support body are integrated. Various configurations have been proposed for a support body for an all-solid-state battery (e.g., see Patent Literature 1 to Patent Literature 5).

Citation List

Patent Literature

Patent Literature 1: JP 2014-96311 A
Patent Literature 2: JP 2016-31789 A
Patent Literature 3: JP 2020-77488 A
Patent Literature 4: JP 2020-161243 A

Patent Literature 5: JP 2017-103146 A

Summary of Invention

Technical Problem

Patent Literature 1 proposes a solid electrolyte sheet including a support body that includes an electronically insulating inorganic fiber and is constituted by a non-woven fabric having a porosity of 80 to 99%. Due to including a support body, this solid electrolyte sheet is excellent in self-supporting properties, and the area of the solid electrolyte sheet can be increased.

In the support body, a non-woven fabric contains 40 wt% or less of a binder for bonding fibers to each other in order to form a self-supporting sheet. Containing 40 wt% or less of a binder makes it possible to obtain a support body having high strength, and this support body is excellent in suitability for the battery manufacturing process.

However, since this support body contains 40 wt% or less of the binder, a layered substance having a webbing-like shape (fin-like shape) is easily formed in the interior of the support body due to the binder. Therefore, it may be difficult for the solid electrolyte to enter the interior of the support body, and the solid electrolyte layer may have high internal resistance and interfacial resistance. As a result, the all-solid-state battery using the support body of Patent Literature 1 may be a battery having high resistance, and further reduction in resistance has been desired.

In addition, the thickness of the support body is large in some cases. In such a case, after the solid electrolyte layer is formed, the obtained solid electrolyte layer may be thick. As a result, the battery may have high internal resistance.

Patent Literature 2 proposes a solid electrolyte sheet containing a solid electrolyte on the surface and in the interior of a non-woven fabric. The weight per square meter and thickness of the non-woven fabric to be used are 8 g or less, and 10 to 25 um, respectively.

The solid electrolyte layer formed using the non-woven fabric described in Patent Literature 2 as a support body can retain the solid electrolyte required for ionic conduction between the positive electrode and the negative electrode while having self-supporting properties. Thus, a battery suppressing impedance rise can be produced.

Patent Literature 3 proposes a solid electrolyte sheet in which a solid electrolyte is filled into a support body having a porosity of 60% or more and 95% or less, a thickness of 5 um or more and less than 20 $\mu$m, and heat resistance. Patent Literature 3 states that this solid electrolyte sheet has self-supporting properties even though the thickness is small, and is also excellent in heat resistance, so that a short circuit can be prevented even when pressing is performed at a high temperature. In addition, this solid electrolyte sheet can be subjected to high temperature pressing and thus contributes to a decrease in interfacial resistance between the solid electrolytes. As a result, the output of the battery can be increased.

However, in the solid electrolyte layer using the support body described in Patent Literature 2 or Patent Literature 3, filling of the solid electrolyte may be insufficient. Therefore, the battery has high internal resistance, and further reduction in resistance has been desired.

In addition, the solid electrolyte sheet has self-supporting properties, but the strength of the support body may be low. Since low strength leads to breaking of the support body in the process of forming the solid electrolyte sheet, improvement in the physical strength of a support body has been required.

Patent Literature 4 proposes a non-woven fabric base material for a separator of a lithium secondary battery, containing unstretched polyester fibers and wet heat adhesive fibers as binder fibers. The unstretched polyester fibers are softened or melted by a heat-pressure treatment such as calendering and is firmly bonded to other fibers. Patent Literature 4 also states that wet heat adhesive fibers flow or are easily deformed in a wet state to exhibit an adhesive function. Patent Literature 4 states that a non-woven fabric base material for a separator of a lithium secondary battery separator, having high tensile strength and high productivity of a separator can be provided due to containing these binders in the non-woven fabric base material.

However, since the wet heat adhesive fibers contained in the non-woven fabric base material flow or are deformed before exhibition of an adhesive function as described above, the wet heat adhesive fibers in the non-woven fabric base material cannot maintain a fibrous state and may block off gaps between fibers. Furthermore, the non-woven fabric base material of Patent Literature 4 may have high density. As a result, permeation of the solid electrolyte into the interior of the support body is insufficient, making it difficult to uniformly fill the interior of the support body with the solid electrolyte. As such, the obtained battery may have high internal resistance, and further reduction in resistance of a battery has been required.

Patent Literature 5 proposes a solid electrolyte sheet having a plurality of through-holes formed by etching a film serving as a support body. Patent Literature 5 states that an all-solid-state battery having excellent energy density and output characteristics can be provided by filling a through-hole formed by etching treatment with a solid electrolyte.

However, when the solid electrolyte sheet of Patent Literature 5 is produced, the solid electrolyte is filled into the through-hole. Accordingly, only the interior of the formed through-holes is filled with the solid electrolyte. Therefore, at the interface between the solid electrolyte sheet and the positive electrode or the negative electrode, an interface between the support body as an insulator and the positive electrode or the negative electrode is generated. In other words, the resistance at the interface between the solid electrolyte sheet and the positive electrode or the negative electrode tends to be high. Even in an all-solid-state battery using this support body, further reduction in resistance of the all-solid-state battery has been required.

The present invention has been made in view of the above problems. An object of the present invention is to obtain a solid electrolyte layer having low internal resistance, in which the support body has sufficient physical strength, and a pass line of lithium ions in the interior of the solid electrolyte layer is sufficiently formed by improving the permeability of the solid electrolyte into the interior of the support body. Another object of the present invention is to provide a lithium ion secondary battery having low internal resistance by using this support body.

Solution to Problem

A support body according to the present invention has been made to solve the above problems, and has, for example, the following configuration.

That is, the support body is included in a solid electrolyte layer of a lithium ion secondary battery, and the support body includes a non-woven fabric, in which the non-woven fabric has an air permeability in a range of 1 to 50 $L/cm^2/min$, a thickness in a range of 5 to 30 um, and a density in a range of 0.15 to 0.45 $g/cm^3$.

Furthermore, a lithium ion secondary battery according to the present invention includes a solid electrolyte layer including the support body according to the above-described invention.

Advantageous Effects of Invention

According to the present invention, the following support body can be obtained. The support body has physical strength to withstand the force during formation of the solid electrolyte layer and can contribute to reduction of the internal resistance of the solid electrolyte layer by improving the permeability of the solid electrolyte into the interior of the support body.

Furthermore, use of the support body according to the present invention in a lithium ion secondary battery can contribute to reduction in internal resistance of the battery.

Description of Embodiments

Hereinafter, embodiments of the present invention will be described in detail.

In the present invention, a support body used for forming a solid electrolyte layer existing between a positive electrode and a negative electrode is configured in a lithium ion secondary battery configured as an all-solid-state battery.

The support body according to the present invention is included in the solid electrolyte layer of the lithium ion secondary battery and is constituted by a non-woven fabric having an air permeability in a range of 1 to 50 $L/cm^2/min$, a thickness in a range of 5 to 30 um, and a density in a range of 0.15 to 0.45 $g/cm^3$.

The solid electrolyte layer present between the positive electrode and the negative electrode is required to conduct lithium ions between the positive electrode and the negative electrode during charge and discharge. In other words, a pass line by the solid electrolyte needs to be formed such that lithium ions can be conducted not only between the solid electrolyte layer and the positive electrode or the negative electrode but also to the interior of the support body. More specifically, if the solid electrolyte sufficiently adheres to the surface of the support body as a matter of course, as well as many pass lines of lithium ions by the solid electrolyte can be formed in the interior of the support body, a solid electrolyte layer having low internal resistance can be formed.

When the conventional support body is used, the further reduction in internal resistance is inhibited. The possible factor of such inhibition is as follows.

In the conventional support body, although pores are present in the interior of the support body, the opening on the surface of the support body may be small. For such a reason, conceivably, the solid electrolyte has not been able to be sufficiently filled into the interior of the support body from the surface of the support body. Conceivably, as a result of the above, a connection of the solid electrolyte cannot be formed in the interior of the support body, that is, a pass line of lithium ions between the positive electrode and the negative electrode is not sufficiently formed, so that the solid electrolyte layer has high internal resistance.

The inventors of the present invention have found that it is important to form a solid electrolyte layer forming a continuous connection with the interior of the support body in order to form a pass line of lithium ions between the positive electrode and the negative electrode. That is, the inventors of the present invention have found that it is important not only to sufficiently attach the solid electrolyte to the surface of the support body as a matter of course but also to sufficiently fill the inside of the support body with the solid electrolyte. Enhancement of the permeability of the solid electrolyte of the support body can improve the filling properties of the solid electrolyte and enables formation of a solid electrolyte layer having low internal resistance.

In the embodiment of the present invention, air permeability is adopted as an index for measuring the permeability of the solid electrolyte into the interior of the support body. The air permeability indicates the amount of air flowing per unit area and unit time under a constant differential pressure. The higher air permeability indicates that a larger amount of air flows. That is, the higher air permeability of the support body indicates that the gas permeability of the support body is higher. Conceivably, when the air permeability of the support body is high, permeability of the solid electrolyte into the interior of the support body is also high. That is, the interior of the support body having high air permeability can conceivably be filled with a sufficient solid electrolyte.

The support body according to the present invention has an air permeability in the range of 1 to 50 $L/cm^2/min$.

The support body having the air permeability within the above range is excellent in the filling properties of the solid electrolyte. In the support body having the air permeability within the above range, the fibers laminated in the thickness direction overlap moderately. When the solid electrolyte is filled into the interior of such a support body, the support body is less inhibitory to permeation of the solid electrolyte into the interior of the support body. Therefore, the solid electrolyte can not only be sufficiently attached to the surface of the support body as a matter of course but also be filled into the interior of the support body. As a result, the all-solid-state battery using this support body can reduce the internal resistance.

Less than 1 $L/cm^2/min$ of the air permeability may make the solid electrolyte unable to be uniformly filled into the interior of the support body. A conceivable reason therefor is as follows.

If the air permeability is less than 1 $L/cm^2/min$, the number of fibers constituting the support body is large and the support body is dense. Accordingly, when the support body is filled with the solid electrolyte, the support body having such an air permeability inhibits the permeation of the solid electrolyte into the interior thereof. As a result, the solid electrolyte remains on the surface of the support body, and it becomes difficult to uniformly fill the interior of the support body with the solid electrolyte.

On the other hand, when the air permeability is more than 50 $L/cm^2/min$, the effect brought about by using the support body cannot be obtained. When filled with the solid electrolyte, the support body having an air permeability of more than 50 $L/cm^2/min$ does not allow the solid electrolyte to remain, making it difficult to retain and reinforce the solid electrolyte. This may conceivably make unable to form the solid electrolyte layer or to prevent strain of the solid electrolyte layer generated during drying, leading to occurrence of cracks. That is, a thin and uniform solid electrolyte layer cannot be obtained, which is not preferable.

From the viewpoint of permeability of the solid electrolyte into the support body and formation of the uniform solid electrolyte layer, the air permeability of the support body is more preferably in the range of 2 to 40 $L/cm^2/min$.

The thickness of the support body is preferably in the range of 5 to 30 $\mu$m. Less than 5 um of the thickness makes the thin solid electrolyte layer, making it difficult to prevent a short circuit between the positive electrode and the negative electrode. In order to increase the interelectrode distance for the purpose of preventing a short circuit, a thick solid electrolyte layer can be formed on the surface of the support body. In this case, however, a portion of the solid electrolyte layer in which the support body is not present is generated. In other words, the portion of the solid electrolyte layer with no support body may conceivably make unable to prevent strain of the solid electrolyte layer generated during drying, and the like, leading to occurrence of cracks. On the other hand, the thickness of more than 30 um increases the thickness of the solid electrolyte layer, making it difficult to suppress the internal resistance of the all-solid-state battery.

The density of the support body is preferably in the range of 0.15 to 0.45 $g/cm^3$. Less than 0.15 $g/cm^3$ of the density decreases the number of fibers constituting the support body and increases pores in the support body. Accordingly, the solid electrolyte does not remain in the support body, making it difficult to uniformly retain and reinforce the solid electrolyte. On the other hand, more than 0.45 $g/cm^3$ of the density deteriorates the permeability of the solid electrolyte into the interior of the support body, and the interior of the support body may be not able to be sufficiently filled with the solid electrolyte. Accordingly, suppression of the internal resistance of the all-solid-state battery becomes difficult.

From the viewpoint of permeability of the solid electrolyte into the support body and formation of the uniform solid electrolyte layer, the density of the support body is more preferably in the range of 0.18 to 0.42 $g/cm^3$.

The support body according to the present invention includes a non-woven fabric. The reason therefor is as follows.

Since the non-woven fabric has a configuration in which fibers are randomly disposed, the support body including the non-woven fabric includes variously sized pores and variously sized through-holes in the interior thereof. Accordingly, there are the solid electrolyte remaining on the surface of the support body, the solid electrolyte permeating into the interior of the support body, being filled into pores inside, and remaining in the pores, and the solid electrolyte passing through the through-hole from the front surface side from which the solid electrolyte is filled and permeating to the back surface side. The solid electrolytes in these states are in close contact with each other. That is, the support body including the non-woven fabric allows the solid electrolyte to adhere to the surface of the support body and the interior of the support body to be filled with the solid electrolyte.

Therefore, in the solid electrolyte layer produced using the non-woven fabric as a support body, the solid electrolyte can be sufficiently present in the interior of and on the surface of the solid electrolyte layer. The internal resistance of the solid electrolyte layer can thus be reduced, and the interfacial resistance between the solid electrolyte layer and the positive electrode or the negative electrode can be reduced. This can conceivably result in the reduction of the internal resistance of the all-solid-state battery.

In addition, the conventional support body has a problem of insufficient physical strength; for example, the support body may be broken by force applied in a plane direction or a thickness direction of the support body upon filling the solid electrolyte into the support body in a manufacturing process of the solid electrolyte layer. In order to increase the strength of the support body, a binder or a binder fiber as in the conventional art can be used, but the filling properties of the solid electrolyte into the interior of the support body may be deteriorated. Consequently, it has been difficult to provide both excellent filling properties and high physical strength of the support body.

The support body according to the present invention preferably contains binder fibers.

The binder fiber used in the support body according to the present invention refers to a fiber that constitutes the support body in a fibrous state and point-bonds the fibers to each other.

The support body according to the present invention preferably contains 20 to 80 mass% of binder fibers from the viewpoint of heat resistance and tensile strength. The binder fiber has a role as a constituent fiber of the support body and a role as a binder. Breakage during formation of the solid electrolyte layer can be reduced by using the binder fiber as a constituent material of the support body. In addition, the binder fiber only bonds contact points between fibers, and thus permeation of the solid electrolyte into the interior of the support body is less likely to be inhibited.

On the other hand, if a binder not in a fibrous state in a state of constituting the support body is used, the binder component blocks off gaps between fibers due to factors such as forming a large number of film layers in the interior of the support body upon exhibition of the binder function. As a result, the permeation of the solid electrolyte into the interior of the support body may be inhibited.

When the amount of the binder fibers is less than 20 mass%, the number of bonding points between the fibers is too small, and thus the desired tensile strength cannot be obtained. Therefore, breakage may occur in the manufacturing process, leading to a decrease in manufacturing yield.

More than 80 mass% of the binder fibers deteriorates heat resistance and may result in a failure to form a uniform solid electrolyte layer in the manufacturing process, which is not preferable. This also may make the support body too dense and make it difficult to uniformly fill the interior of the support body with the solid electrolyte.

From the viewpoint of heat resistance and tensile strength of the support body, permeability of the solid electrolyte into the support body, and formation of a uniform solid electrolyte layer, the amount of binder fibers contained in the support body is more preferably 25 to 75 mass%.

A material that can be used as the binder fiber is not particularly limited as long as the material is a fiber not repelling the solid electrolyte slurry, not adversely affecting the solid electrolyte, and having insulating properties. Examples thereof include polyester binder fibers and polyamide binder fibers.

In the support body according to the present invention, the tensile strength of the support body is preferably 1.0 N/15 mm or more. Less than 1.0 N/15 mm of the tensile strength is likely to cause breakage during filling of the solid electrolyte.

A material that can be used as the other constituent fibers is not particularly limited as long as the material is a fiber not repelling the solid electrolyte slurry, not adversely affecting the solid electrolyte, and having insulating properties. Examples thereof include: organic fibers such as polyester fibers, polyamide fibers, and cellulose fibers; and inorganic fibers such as glass fibers and alumina fibers. One or more kinds of fibers selected from these fibers can be used. By using these fibers, a support body having excellent filling properties and heat resistance of the solid electrolyte can be obtained. Beatable fibers such as polyamide fibers and cellulose fibers may be beaten in order to improve the breaking resistance of the support body.

The binder fibers and other constituent fibers to be used preferably have an average fiber diameter of 1 to 15 um. Inclusion of fibers having a fiber diameter of less than 1 um makes the support body to be formed dense and makes it difficult to fill the interior of the support body with the solid electrolyte. On the other hand, more than 15 um of the fiber thickness makes it difficult to form a support body having a uniform thickness. This may result in formation of the non-uniform solid electrolyte layer and the increased resistance between the positive electrode and the negative electrode.

The method for manufacturing the support body is not particularly limited, and the support body can be manufactured by a dry method or a wet method. However, a wet method in which fibers dispersed in water are deposited on wires, and water removal and drying are performed to make a paper sheet is preferable from the viewpoint of homogeneity of formation or the like of the support body.

In the embodiment of the present invention, a wet non-woven fabric formed by using a papermaking method was adopted as the support body. The papermaking format of the support body is not particularly limited as long as the air permeability, thickness, and density can be satisfied, and papermaking formats such as Fourdrinier papermaking, tanmo papermaking, and cylinder papermaking can be adopted. The support body may include a plurality of layers formed by these papermaking methods. In papermaking, additives such as a dispersing agent, an antifoaming agent, and a paper strengthening agent may be added, and post-processing such as paper strengthening processing, lyophilic processing, calendering, thermal calendering, and embossing may be performed after formation of a paper layer.

(Method for Producing Support Body and All-Solid-State Battery and Method for Measuring Characteristics)

The method for producing the support body and the all-solid-state battery according to the present embodiment and the method for measuring the characteristics were performed under the following conditions and methods.

[Thickness]

The thickness of one support body was measured at equal intervals using the Dial Thickness Gauge G type (measuring reaction force: 2 N, contact point: φ10 mm), and the average value of the thicknesses at the measurement places was taken as the thickness (μm) of the support body.

[Basis Weight]

The basis weight of the support body in the bone dry condition was measured in accordance with the method defined in "JIS C 2300-2 'Cellulosic papers for electrical purposes-Part 2: Methods of test', 6 Basis weight".

[Density]

The density of the support body was calculated by using the following equation:

$$\text{Density (g/cm}^3) = W/T$$

W: Basis weight (g/m$^2$), T: Thickness (μm)

[Porosity]

The porosity of the support body was calculated by using the following equation. Note that when a plurality of materials constituting the support body were mixed, the porosity was calculated after the average specific gravity of the constituent fibers was determined by performing proportional calculation based on the mixture ratio.

$$\text{Porosity (\%)} = (1 - (D/S)) \times 100$$

D: Density of support body (g/cm$^3$), S: Specific gravity of constituent fibers (g/cm$^3$)

[Air Permeability]

The air permeability of the support body was measured in accordance with the method specified in "JIS L 1096 'Testing methods for woven and knitted fabrics', Air permeability-Method A (Frazier method)".

[Tensile Strength]

The maximum tensile load in the longitudinal direction (manufacturing direction) of the support body was measured with a test width of 15 mm in accordance with the method defined in "JIS P 8113 'Paper and board-Determination of tensile properties-Part 2: Constant rate of elongation method'" (ISO 1924-2 "Paper and board-Determination of tensile properties-Part 2: Constant rate of elongation method"). The measured value was taken as the tensile strength of the support body.

[Process of Producing All-Solid-State Battery]

All-solid-state batteries were produced by using the support bodies of examples, comparative examples, conventional examples, and a reference example described below.
A specific production method is as follows.

(Positive Electrode Structure)

LiNiCoAlO$_2$ ternary powder was used as a positive electrode active material, Li$_2$S-P$_2$S$_5$ amorphous powder was used as a sulfide-based solid electrolyte, and carbon fibers were used as a conductive additive, and they were mixed. This mixed powder was mixed with a dehydrated xylene solution in which styrene-butadiene rubber (SBR) was dissolved as a binder to prepare a coating solution for the positive electrode. An aluminum-foiled current collector as a positive electrode current collector was coated with the coating solution for the positive electrode, and the coated current collector was dried and then rolled to obtain a positive electrode structure.

(Negative Electrode Structure)

Graphite was used as a negative electrode active material, a Li$_2$S-P$_2$S$_5$ amorphous powder was used as a sulfide-based solid electrolyte, PVdF was used as a binder, and NMP was used as a solvent, and they were mixed to prepare a coating solution for the negative electrode. A copper foil current collector as a negative electrode current collector was coated with the coating solution for the negative electrode, and the coated current collector was dried and then rolled to obtain a negative electrode structure.

(Solid Electrolyte Layer)

Li$_2$S-P$_2$S$_5$ amorphous powder was used as a sulfide-based solid electrolyte, SBR was used as a binder, and xylene was used as a solvent, and they were mixed to prepare a coating solution for the solid electrolyte layer.
The support body of each of examples, comparative examples, and conventional examples described below was coated with the coating solution for the solid electrolyte layer, and the coated support body was dried to obtain a solid electrolyte layer.

[Evaluation of Self-Supporting Properties of Solid Electrolyte Layer]

Self-supporting properties of each of the produced solid electrolyte layers were evaluated.
Whether the produced solid electrolyte layer having a size of 92 mm × 62 mm can be lifted horizontally was evaluated. A case where the solid electrolyte layer was able to be lifted horizontally while maintaining the shape is evaluated as o, and a case where the shape was not maintained when the solid electrolyte layer was lifted horizontally is evaluated as ×.

[Manufacture of All-Solid-State Battery]

A negative electrode structure having a size of 88 mm × 58 mm, a solid electrolyte layer having a size of 92 mm × 62 mm, and a positive electrode structure having a size of 87 mm × 57 mm were laminated and bonded together by performing dry lamination processing to obtain a unit cell of an all-solid-state battery.
The obtained unit cell was put into an aluminum-laminated film to which a terminal was attached. Then, gas was removed, and the laminated film was heat-sealed, thereby packing the unit cell.

[Method for Evaluating All-Solid-State Battery]

Specific performance evaluation of the produced all-solid-state batteries was performed under the following conditions and methods.

[Impedance]

The all-solid-state battery was charged to 4.0 V at a current density of 0.1 C in an environment of 25°C, measurement was performed in a range of frequency of 0.1 Hz to 1 MHz by using an LCZ meter, and an impedance value was obtained from a Cole-Cole plot.
For details of the impedance value obtained from the Cole-Cole plot, an arc obtained from the impedance measured at each frequency is fitted into a semicircle shape with the x axis as a base, and the numerical value of a portion where a right end of a semicircle intersects the x axis was taken as the impedance value.

[Discharge Capacity]

The all-solid-state battery was charged to 4.0 V at a current density of 0.1 C in an environment of 25°C, and then discharged to 2.5 V at a current density of 0.1 C. The discharge capacity at that time was measured.

Examples

Hereinafter, specific examples and the like of the support body according to the embodiments of the present invention will be described.

[Example 1]

By using a raw material obtained by mixing 50 mass% of polyester binder fibers and 50 mass% of polyester fibers, cylinder papermaking was performed to obtain a support body of Example 1.
The support body of Example 1 had the thickness of 15 $\mu$m, the basis weight of 2.6 g/m$^2$, the density of 0.17 g/cm$^3$, the porosity of 87.4%, the air permeability of 48.7 L/cm$^2$/min, and the tensile strength of 1.1 N/15 mm.

[Example 2]

By using a raw material obtained by mixing 50 mass% of polyester binder fibers and 50 mass% of polyester fibers, tanmo papermaking was performed. The obtained non-woven fabric was subjected to thermal calendering to obtain a support body of Example 2.
The support body of Example 2 had the thickness of 20 $\mu$m, the basis weight of 8.0 g/m$^2$, the density of 0.40 g/cm$^3$, the porosity of 71.0%, the air permeability of 1.2 L/cm$^2$/min, and the tensile strength of 8.9 N/15 mm.

[Example 3]

By using a raw material obtained by mixing 20 mass% of polyamide binder fibers and 80 mass% of cellulose fibers, tanmo papermaking was performed to obtain a support body of Example 3.
The support body of Example 3 had the thickness of 29 um, the basis weight of 11.9 g/m$^2$, the density of 0.41 g/cm$^3$, the porosity of 71.3%, the air permeability of 2.9 L/cm$^2$/min, and the tensile strength of 7.3 N/15 mm.

[Example 4]

By using a raw material obtained by mixing 80 mass% of polyester binder fibers and 20 mass% of cellulose fibers, cylinder papermaking was performed to obtain a support body of Example 4.
The support body of Example 4 had the thickness of 5 $\mu$m, the basis weight of 2.2 g/m$^2$, the density of 0.43 g/cm$^3$, the porosity of 68.7%, the air permeability of 25.1 L/cm$^2$/min, and the tensile strength of 4.3 N/15 mm.

[Example 5]

By using a raw material obtained by mixing 25 mass% of polyester binder fibers and 75 mass% of polyester fibers, cylinder papermaking was performed to obtain a support body of Example 5.
The support body of Example 5 had the thickness of 15 $\mu$m, the basis weight of 5.3 g/m$^2$, the density of 0.35 g/cm$^3$, the porosity of 74.6%, the air permeability of 32.2 L/cm$^2$/min, and the tensile strength of 2.5 N/15 mm.

[Example 6]

By using a raw material obtained by mixing 75 mass% of polyamide binder fibers and 25 mass% of polyamide fibers, tanmo papermaking was performed to obtain a support body of Example 6.
The support body of Example 6 had the thickness of 25 $\mu$m, the basis weight of 4.8 g/m$^2$, the density of 0.19 g/cm$^3$, the porosity of 83.2%, the air permeability of 38.9 L/cm$^2$/min, and the tensile strength of 6.1 N/15 mm.

[Comparative Example 1]

By using a raw material obtained by mixing 50 mass% of polyester binder fibers and 50 mass% of polyester fibers, cylinder papermaking was performed to obtain a support body of Comparative Example 1.
The support body of Comparative Example 1 had the thickness of 30 $\mu$m, the basis weight of 3.5 g/m$^2$, the density of 0.12 g/cm$^3$, the porosity of 91.5%, the air permeability of 52.1 L/cm$^2$/min, and the tensile strength of 1.0 N/15 mm.

[Comparative Example 2]

By using a raw material obtained by mixing 85 mass% of polyamide binder fibers and 15 mass% of polyamide fibers, cylinder papermaking was performed to obtain a support body of Comparative Example 2.

The support body of Comparative Example 2 had the thickness of 5 $\mu$m, the basis weight of 2.3 g/m$^2$, the density of 0.45 g/cm$^3$, the porosity of 62.5%, the air permeability of 20.6 L/cm$^2$/min, and the tensile strength of 5.6 N/15 mm.

[Comparative Example 3]

By using a raw material obtained by mixing 70 mass% of polyamide binder fibers and 30 mass% of polyamide fibers, cylinder papermaking was performed to obtain a support body of Comparative Example 3.

The support body of Comparative Example 3 had the thickness of 4 $\mu$m, the basis weight of 1.8 g/m$^2$, the density of 0.45 g/cm$^3$, the porosity of 63.4%, the air permeability of 27.1 L/cm$^2$/min, and the tensile strength of 4.1 N/15 mm.

[Comparative Example 4]

By using a raw material obtained by mixing 50 mass% of polyamide binder fibers and 50 mass% of cellulose fibers, tanmo papermaking was performed to obtain a support body of Comparative Example 4.

The support body of Comparative Example 4 had the thickness of 43 $\mu$m, the basis weight of 8.6 g/m$^2$, the density of 0.20 g/cm$^3$, the porosity of 84.8%, the air permeability of 10.6 L/cm$^2$/min, and the tensile strength of 7.8 N/15 mm.

[Conventional Example 1]

By using a raw material obtained by mixing 15 mass% of polyester binder fibers and 85 mass% of polyester fibers, cylinder papermaking was performed with reference to the method of producing the support body described in Example 1 of Patent Literature 2 to obtain a support body of Conventional Example 1.

The support body of Conventional Example 1 had the thickness of 10 $\mu$m, the basis weight of 3.0 g/m$^2$, the density of 0.30 g/cm$^3$, the porosity of 78.3%, the air permeability of 31.9 L/cm$^2$/min, and the tensile strength of 0.7 N/15 mm.

[Conventional Example 2]

A support body manufactured by the same method as that described in Example 1 of Patent Literature 4 was produced to obtain a support body of Conventional Example 2. In Conventional Example 2, 10 mass% of polyester binder fibers, 10 mass% of ethylene vinyl alcohol fibers, and 80 mass% of polyester fibers were mixed.

The support body of Conventional Example 2 had the thickness of 12 $\mu$m, the basis weight of 7.0 g/m$^2$, the density of 0.58 g/cm$^3$, the porosity of 57.7%, the air permeability of 0.7 L/cm$^2$/min, and the tensile strength of 11.2 N/15 mm.

[Conventional Example 3]

A support body manufactured by the same method as that described in Example 1 of Patent Literature 5 was produced to obtain a support body of Conventional Example 3. In Conventional Example 3, a polyimide film is etched to form an 800-$\mu$m square hole, thereby producing a support body.

The support body of Conventional Example 3 had the thickness of 30 $\mu$m, the basis weight of 5.2 g/m$^2$, the density of 0.17 g/cm$^3$, the porosity of 88.0%, the air permeability of 28.8 L/cm$^2$/min, and the tensile strength of 4.0 N/15 mm.

[Reference Example]

By using a raw material obtained by mixing 30 mass% of polyester binder fibers, 50 mass% of polyester fibers, and 20 mass% of polyvinyl alcohol fibers, tanmo papermaking was performed to obtain a support body of Reference Example.

The support body of Reference Example had the thickness of 20 $\mu$m, the basis weight of 8.0 g/m$^2$, the density of 0.40 g/cm$^3$, the porosity of 70.8%, the air permeability of 0.8 L/cm$^2$/min, and the tensile strength of 9.7 N/15 mm.

The fiber names and blending ratios of the binder fibers and the other fibers of the support bodies of Example 1 to Example 6, Comparative Example 1 to Comparative Example 4, Conventional Example 1 to Conventional Example 3, and Reference Example described above are listed in Table 1.

[Table 1]

| | Composition of support body | | | |
|---|---|---|---|---|
| | Binder fiber | | Other fibers | |
| | Fiber name | Blending ratio | Fiber name | Blending ratio |
| | - | wt% | - | wt% |
| Example 1 | Polyester binder | 50 | Polyester | 50 |
| Example 2 | Polyester binder | 50 | Polyester | 50 |
| Example 3 | Polyamide binder | 20 | Cellulose | 80 |
| Example 4 | Polyester binder | 80 | Cellulose | 20 |
| Example 5 | Polyester binder | 25 | Polyester | 75 |
| Example 6 | Polyamide binder | 75 | Polyamide | 25 |
| Comparative Example 1 | Polyester binder | 50 | Polyester | 50 |
| Comparative Example 2 | Polyamide binder | 85 | Polyamide | 15 |
| Comparative Example 3 | Polyamide binder | 70 | Polyamide | 30 |
| Comparative Example 4 | Polyamide binder | 50 | Cellulose | 50 |
| Conventional Example 1 | Polyester binder | 15 | Polyester | 85 |
| Conventional Example 2 | Polyester binder | 10 | Ethylene vinyl alcohol Polyester | 10<br>80 |
| Conventional Example 3 | Polyimide film etched to form 800- $\mu$ m square hole | | | |
| Reference Example | Polyester binder | 30 | Polyester<br>Polyvinyl alcohol | 50<br>20 |

Table 2 provides the evaluation results of the support body characteristics, the self-supporting properties of the solid electrolyte layers, and the battery characteristics of Example 1 to Example 6, Comparative Example 1 to Comparative Example 4, Conventional Example 1 to Conventional Example 3, and Reference Example described above.

[Table 2]

| | Support body characteristics | | | | | | Solid electrolyte layer | Battery characteristics | |
|---|---|---|---|---|---|---|---|---|---|
| | Thickness | Basis weight | Density | Porosity | Air permeability | Tensile strength | Self-supporting properties | Impedance | Discharge capacity |
| | $\mu$m | g/m$^2$ | g/cm$^3$ | % | L/cm$^2$/min. | N/15mm | - | $\Omega \cdot$cm$^2$ | mAh/g |
| Example 1 | 15 | 2.6 | 0.17 | 87.4 | 48.7 | 1.1 | ○ | 820 | 69 |
| Example 2 | 20 | 8.0 | 0.40 | 71.0 | 1.2 | 8.9 | ○ | 898 | 60 |
| Comparative Example 1 | 30 | 3.5 | 0.12 | 91.5 | 52.1 | 1.0 | - | - | - |
| Conventional Example 1 | 10 | 3.0 | 0.30 | 78.3 | 31.9 | 0.7 | - | - | - |
| Conventional Example 2 | 12 | 7.0 | 0.58 | 57.7 | 0.7 | 11.2 | × | 103,200 | 0 |
| Conventional Example 3 | 30 | 5.2 | 0.17 | 88.0 | 28.8 | 4.0 | ○ | 1,510 | 47 |
| Reference Example | 20 | 8.0 | 0.40 | 70.8 | 0.8 | 9.7 | ○ | 3,321 | 41 |

Hereinafter, the evaluation results of the all-solid-state batteries using the support bodies of examples, comparative examples, conventional examples, and the reference example will be described in detail.

The support body of Example 1 has low air permeability and high density compared with the support body of Comparative Example 1.

In the support body of Comparative Example 1, the solid electrolyte layer was not able to be uniformly formed. This is conceivably because the air permeability of the support body of Comparative Example 1 is high at 52.1 L/cm$^2$/min and the density is low at 0.12 g/cm$^3$. When the support body of Comparative Example 1 was coated with the coating solution for the solid electrolyte layer and the coated support body was dried, the support body of Comparative Example 1 was not able to retain the solid electrolyte, and a uniform solid electrolyte layer was not able to be formed. Therefore, an all-solid-state battery was not able to be produced by using the support body of Comparative Example 1.

As can be seen from the comparison between Example 1 and Comparative Example 1, the support body preferably has an air permeability of 50 L/cm$^2$/min or less and a density of 0.15 g/cm$^3$ or more.

The all-solid-state battery using the support body of each example has a low impedance and a high discharge capacity compared with the all-solid-state battery using the support body of Comparative Example 2. In addition, the support body of each example had self-supporting properties unlike the support body of Comparative Example 2.

The support body of Comparative Example 2 has a high content of binder fibers of 85 mass%. Therefore, when the support body of Comparative Example 2 was coated with the coating solution for the solid electrolyte layer and the solvent was dried, a cracked solid electrolyte layer was obtained. This is conceivably because the heat resistance of the support body was poor due to the high content of binder fibers of 85 mass%, and the form of the support body was changed by heat. Therefore, when the solid electrolyte layer was lifted, cracking occurred, and self-supporting properties were not exhibited.

Although the solid electrolyte layer using the support body of Comparative Example 2 was cracked, an all-solid-state battery was able to be produced by laminating the solid electrolyte layer with the positive electrode and the negative electrode.

The all-solid-state battery using the support body of Comparative Example 2 had a high impedance, and the battery was not able to be discharged. This is conceivably because the solid electrolyte layer is non-uniform due to the occurrence of cracks, and thus the number of pass line that can conduct lithium ions between the positive electrode and the negative electrode is small.

As can be seen from the comparison between each example and Comparative Example 2, the amount of binder fibers contained in the support body is preferably 80 mass% or less in order for the support body to have the heat resistance to withstand heat during formation of the solid electrolyte layer.

The support body of Comparative Example 3 has a small thickness compared with the support body of each example. Therefore, a short circuit occurred in the all-solid-state battery using the support body of Comparative Example 3. This is conceivably because a short circuit between the positive electrode and the negative electrode was not able to be prevented due to the thin support body of Comparative Example 3 with a thickness of 4 um. Note that various battery evaluations on the all-solid-state battery using the support body of Comparative Example 3 was not able to be performed due to the occurrence of a short circuit. As can be seen from the comparison between each example and Comparative Example 3, the thickness of the support body is preferably 5 um or more.

The support body of Comparative Example 4 has a large thickness compared with the support body of each example.

The all-solid-state battery using the support body of Comparative Example 4 has a low impedance and a high discharge capacity compared with the all-solid-state battery using the support body of each conventional example and is thus improved in battery characteristics. However, the obtained battery was large due to the thick support body with a thickness of 43 um. Considering from the viewpoint of downsizing the obtained all-solid-state battery, the thickness of the support body is preferably 30 um or less.

The support body of each example has a high tensile strength compared with the support body of Conventional Example 1.

The support body of Conventional Example 1 was broken when the support body was coated with the coating solution for the solid electrolyte layer, and the excess coating solution was removed. This is conceivably because the tensile strength of the support body of Conventional Example 1 is as weak as 0.7 N/15 mm. In Conventional Example 1, since a solid electrolyte layer was not able to be formed, an all-solid-state battery was not produced and evaluated.

Conceivably, the weak tensile strength of the support body of Conventional Example 1 is attributable to the following factor: the binder fiber content was as low as 15 mass%, and thus the number of bonding points between fibers was too small to obtain the desired tensile strength.

As can be seen from the comparison between each example and Conventional Example 1, a support body containing 20 mass% or more of binder fibers is preferable for preventing breakage of the support body during manufacture of the solid electrolyte layer.

The all-solid-state battery using the support body of each example has a low impedance and a high discharge capacity compared with the all-solid-state batteries using the support bodies of Conventional Example 2 and Conventional Example 3. In addition, the support body of each example had self-supporting properties unlike the support body of Conventional Example 2.

The support body of Conventional Example 2 has a low air permeability of 0.7 L/cm$^2$/min. Accordingly, when the support body of Conventional Example 2 was coated with the coating solution for the solid electrolyte layer, the coating solution for the solid electrolyte layer did not permeate into the interior of the support body and remained on the surface of the support body. Therefore, the coating solution for the solid electrolyte layer was dried while remaining on the surface of the support body, and the solid electrolyte layer was formed on the surface of the support body. Since the solid electrolyte layer formed on the surface of the support body was dried without the support body, the solid electrolyte was not reinforced, so that cracks occurred. Therefore, when the solid electrolyte layer was lifted, cracking occurred, and self-supporting properties were not exhibited.

Although the solid electrolyte layer using the support body of Conventional Example 2 was cracked, an all-solid-state battery was able to be produced by laminating the solid electrolyte layer with the positive electrode and the negative electrode.

In addition, although the content of binder fibers is as low as 10 mass%, the support body of Conventional Example 2 has high physical strength with tensile strength of 11.2 N/15 mm, which is equal to or higher than that of each example. This is conceivably because there are many contact points between fibers due to a high density of 0.58 g/cm$^3$.

The battery using the support body of Conventional Example 2 had a very high impedance and thus was not able to be discharged. The reason for this is considered as follows: the density was as high as 0.58 g/cm$^3$, the air permeability was as low as 0.7 L/cm$^2$/min, and further, 10 mass% of the ethylene-vinyl alcohol fibers that cannot maintain the fibrous state was contained in the non-woven fabric state in order to increase the strength; thus, filling of the solid electrolyte was insufficient.

The following can be seen from the comparison between Example 2 and Conventional Example 2. The support body preferably has the air permeability of 1 L/cm$^2$/min or more and the density of 0.45 g/cm$^3$ or less, and the content of the binder fiber is preferably 20 mass% or more, in order to provide both physical strength to withstand the force during manufacture of the solid electrolyte layer and the filling properties of the solid electrolyte.

The support body of Conventional Example 3 is a support body in which a through-hole is formed in a film, unlike the support body of each example that is constituted by the non-woven fabric. The through-hole of the support body of Conventional Example 3 can be filled with the solid electrolyte, but only the interior of the formed through-hole can be filled with the solid electrolyte. In addition, in the solid electrolyte layer including the support body of Conventional Example 3, an interface between the film as an insulator and the positive electrode or the negative electrode is conceivably generated at an interface between the solid electrolyte layer and the positive electrode or the negative electrode. This conceivably causes an increase in impedance of the all-solid-state battery using the support body of Conventional Example 3, compared with that using the support body of each example.

As can be seen from the comparison between each example and Conventional Example 3, a non-woven fabric is suitable as a support body for reducing the impedance of the all-solid-state battery.

The support body of Reference Example had low air permeability compared with each example. As a result, the all-solid-state battery using the support body of Reference Example has a high impedance and a low discharge capacity compared with the all-solid-state battery using the support body of each example.

The support body of Reference Example is a support body in which 20 mass% of polyvinyl alcohol fibers is blended in addition to polyester binder fibers and polyester fibers. Polyvinyl alcohol fibers are effective for improving tensile strength. The polyvinyl alcohol fibers can reinforce the contact points between fibers and improve the tensile strength of the support body by the shape change due to wet heat. However, in a state of constituting the support body, the polyvinyl alcohol fibers are conceivably not in a fibrous state and form a large number of film layers in the interior of the support body. These film layers are considered to block off gaps between fibers. As a result, the air permeability is conceivably lowered to inhibit the permeation of the coating solution for the solid electrolyte layer into the interior of the support body.

Therefore, as can be seen from the comparison between each example and Reference Example, a binder that cannot maintain the fibrous state is preferably not contained.

The above-described example of the embodiment is merely an example. For instance, those skilled in the art can change the composition and the like of the solid electrolyte, the positive electrode, and the negative electrode, if needed.

As described above, by forming the support body such that the non-woven fabric has the air permeability of 1 to 50 L/cm$^2$/min, the thickness of 5 to 30 um, and the density of 0.15 to 0.45 g/cm$^3$, it is possible to obtain a support body having physical strength to withstand the force during manufacture of the solid electrolyte layer and having good permeability of the solid electrolyte into the interior of the support body. By using this support body, an all-solid-state battery having low resistance can be obtained.

**Claims**

1.  A support body included in a solid electrolyte layer of a lithium ion secondary battery, the support body comprising a non-woven fabric, wherein the non-woven fabric has an air permeability in a range of 1 to 50 $L/cm^2/min$, a thickness in a range of 5 to 30 um, and a density in a range of 0.15 to 0.45 $g/cm^3$.

2.  The support body according to claim 1, wherein
    the support body contains binder fibers in a range of 20 to 80 mass%.

3.  A lithium ion secondary battery comprising a solid electrolyte layer including the support body according to claim 1 or 2.

## INTERNATIONAL SEARCH REPORT

| International application No. |
| --- |
| **PCT/JP2022/004199** |

**A. CLASSIFICATION OF SUBJECT MATTER**

*H01M 10/052*(2010.01)i; *H01M 10/0562*(2010.01)i
FI: H01M10/0562; H01M10/052

According to International Patent Classification (IPC) or to both national classification and IPC

**B. FIELDS SEARCHED**

Minimum documentation searched (classification system followed by classification symbols)

H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2020-24860 A (MITSUBISHI PAPER MILLS LTD) 13 February 2020 (2020-02-13) claims, paragraphs [0014], [0037], [0039], [0046]-[0047], [0053], [0061], [0063]-[0089] | 1-3 |
| A | JP 2018-129307 A (FURUKAWA CO LTD) 16 August 2018 (2018-08-16) entire text, all drawings | 1-3 |
| A | JP 2020-161243 A (MITSUBISHI PAPER MILLS LTD) 01 October 2020 (2020-10-01) entire text | 1-3 |
| A | JP 2019-54012 A (FURUKAWA CO LTD) 04 April 2019 (2019-04-04) entire text, all drawings | 1-3 |

☐ Further documents are listed in the continuation of Box C.     ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 March 2022** | **22 March 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/004199**

| Patent document cited in search report | | | Publication date (day/month/year) | Patent family member(s) | Publication date (day/month/year) |
|---|---|---|---|---|---|
| JP | 2020-24860 | A | 13 February 2020 | (Family: none) | |
| JP | 2018-129307 | A | 16 August 2018 | (Family: none) | |
| JP | 2020-161243 | A | 01 October 2020 | (Family: none) | |
| JP | 2019-54012 | A | 04 April 2019 | (Family: none) | |

Form PCT/ISA/210 (patent family annex) (January 2015)

**EP 4 293 775 A1**

**REFERENCES CITED IN THE DESCRIPTION**

**Patent documents cited in the description**

- JP 2014096311 A
- JP 2016031789 A
- JP 2020077488 A
- JP 2020161243 A
- JP 2017103146 A